# EUROPEAN PATENT SPECIFICATION

(11) **EP 1 997 389 B1**
(45) Date of publication and mention of the grant of the patent: **31.08.2011**
(21) Application number: 08153030.5
(22) Date of filing: 19.03.2008
(51) Int. Cl.: A23L 1/187, A23G 9/34, A23G 9/32, A23G 9/52

(54) **Composition for custard and process for the preparation of custard**
Zusammensetzung für Custard und Verfahren zur Zubereitung von Custard
Composition pour crème anglaise et procédé de préparation de la crème anglaise

(30) Priority: 20.03.2007 IT MI20070543
(43) Date of publication of application: 03.12.2008
(73) Proprietor: G.S.G. S.r.l., 36100 Vicenza (IT)
(72) Inventor: Fieurgant, Dominique, 72610, BERUS (FR)
(74) Representative: Martegani, Franco

(56) References cited:
- EP-A- 0 559 316
- EP-A- 0 609 465
- WO-A-00/49883
- WO-A-2004/016094
- US-A- 5 175 013
- US-A- 5 882 701

## Description

The present invention relates to a composition for custard and a process for the preparation of custard.

The present invention derives from the technological field of the cold preservation of confectionery products and in particular confectionery products containing custard, cold preservation which allows the organoleptic and structure properties of the product to remain unaltered for a long period of time.

With a market increase in the wide distribution of food products, the necessity for a better preservation of products for increasingly longer times, has also increased. The time lapse between the preparation of a food product and its consumption is, in fact, very often incompatible with the natural duration of the fresh product.

The freezing and/or deep-freezing of fresh products allow the organoleptic characteristics of many food products, such as fish, vegetables and so-called "ready-to-use" products, i.e. already cooked and ready for consumption, to be maintained for long periods of time. Cold preservation therefore has considerable advantages in terms of preparation time (for example, ready-to-use products, washed vegetables), uniform quality and better guarantee of food hygiene.

Among frozen or deep-frozen confectionery products, however, products containing custard are presently available on the market in quite a limited extent and above all with poor qualitative characteristics. Custard is in fact generally prepared and used in products which require immediate consumption, as preservation under freezing or deep-freezing conditions causes alteration of the organoleptic characteristics and above all the structural characteristics such as creaminess, compactness and softness.

Traditional custards available on the market normally contain the following components: whole milk in a quantity equal to 50-60% by weight of the product, sugar (13-27%), egg yolks (13-16%) and flour or starch (3-7%). The average nutritional composition of traditional custard has a content equal to 6% by weight of fats and 21% by weight of sugar with respect to the total weight of the final product.

Traditional custards are obtained by means of a preparation process which essentially envisages the following phases:
- preparation of a base mixture by mixing sugar, flour (or starches) and egg yolks,
- boiling the milk,
- addition of the base mixture to milk,
- reboiling of the base mixture + milk, and
- cooling.

The custard thus obtained has a smooth, non-gelatinous surface and a soft, thick and compact internal consistency. These characteristics make it suitable for the preparation of numerous confectionery products, where it is generally used for filling and topping, in addition to being tasted as such.

A traditional custard, with a composition and preparation method analogous to what is described above, subjected to cold preservation according to the freezing techniques commonly used for food products (generally at temperatures ranging from -15°C and -20°C) irremediably loses its structural characteristics of softness and creaminess as soon as it is thawed, i.e. when it is brought to the temperature of use (generally between 4°C and 8°C).

This is probably due to the behaviour of the water molecules present in the custard, which can exist in "free" form (i.e. not chemically bound to other substances present in the custard) and in "bound" form (i.e. chemically bound to other substances). As a result of the freezing process, the free molecules solidify, forming crystalline agglomerates of ice which break the creamy emulsion, thus altering the structural characteristics of the cream.

The necessity of availing of a custard with characteristics which allow cold preservation and at the same time which has organoleptic and structural properties as unaltered as possible after thawing, at the temperature of use, with respect to the fresh product, is consequently particularly felt.

US-A-5 175 013 relates to frozen dessert compositions and products according to the preamble of claim 1.

WO 2004/016094 A refers to frozen dessert compositions with starch hydrolysate that includes a mixture of dextrose, maltose, and polysaccharides.

WO 00/49883 A also relates to frozen dairy products and methods of production.

EP-A-0 559 316 refers to soft ice, process for producing the ice cream and apparatus having property of excellent meltdown in the mouth.

An objective of the present invention is to find a composition for a custard which overcomes the disadvantages of the known art.

In particular, an objective of the present invention is to find a composition for custard which is such that the custard, once thawed, maintains its original structural properties of creaminess and softness, also keeping its organoleptic properties unaltered.

It has been surprisingly found that a particular composition for custard, suitably modified with respect to a traditional composition for custard, by the addition of particular additives and an optimized preparation process of custard, allow the above objectives to be achieved, overcoming the drawbacks of the known art.

An object of the present invention therefore relates to a claim 1

An object of the present invention also relates to a process for the preparation of custard starting from a mixture of:
a) milk in a quantity ranging from 50% to 70% by weight with respect to the total weight of the mixture, preferably from 55% to 65%;
b) sugar in a quantity ranging from 5% to 30% by weight with respect to the total weight of the mixture, preferably from 10% to 20%;
c) starch in a quantity ranging from 2% to 10% by weight with respect to the total weight of the mixture, preferably from 4% to 8%;
d) egg yolks in a quantity ranging from 5% to 15% by weight with respect to the total weight of the mixture, preferably from 8% to 12%;
e) powdered milk in a quantity ranging from 0.1% to 1.5% by weight with respect to the total weight of the mixture, preferably from 0.5% to 1%;
f) butter in a quantity ranging from 5% to 15% by weight with respect to the total weight of the mixture, preferably from 8% to 12%;
g) thickeners in a quantity ranging from 0.1% to 1% by weight with respect to the total weight of the mixture, preferably from 0.1% to 0.3%;
h) emulsifying agents in a quantity ranging from 0.1% to 1% by weight with respect to the total weight of the mixture, preferably from 0.1% to 0.3%;
i) gelifiers in a quantity ranging from 0.05% to 0.5% by weight with respect to the total weight of the mixture, preferably from 0.05% to 0.15%,
   which comprises the following phases:
   i) mixing components a)-e) and g)-i);
   ii) pasteurizing the mixture obtained from phase i) at a temperature ranging from 70°C to 90°C, preferably at 80°C,
   iii) adding component f) to the mixture, preferably at a temperature of the mixture of 85°C;
   iv) cooling the mixture at a rate ranging from 5°C to 15°C/min, preferably from 8°C/min to 12°C/min, under continuous stirring to a temperature ranging from 4°C to 10°C;
   v) freezing the mixture at a temperature ranging from-30°C to -35°C for a time varying from 30 to 45 minutes, preferably 30 minutes;
   vi) preserving the mixture at a temperature ranging from -15°C to -20°C.

The custard thus obtained has characteristics which maintain the organoleptic and structural characteristics unaltered also when kept frozen for long periods of time.

The milk which forms component a) of the composition for custard according to the present invention is selected from whole milk, partially skimmed or skimmed milk, fresh milk or long-life milk and/or mixtures thereof, preferably fresh or whole milk.

The sugar which forms component b) of the composition for custard according to the present invention is selected from saccharose, lactose, dextrose, intensive sugars, and/or mixtures thereof, preferably saccharose.

The starch which forms component c) of the composition for custard according to the present invention is selected from maize starch, tapioca starch, potato starch and/or mixtures thereof, preferably maize starch.

The egg yolks which form component d) of the composition according to the present invention are selected from fresh egg yolks, powder egg yolks, frozen egg yolks and/or mixtures thereof, preferably fresh egg yolks.

The powdered milk which forms component e) of the composition for custard according to the present invention is selected from lean milk, whey and/or mixtures therefore, preferably lean milk.

The thickeners which form component g) of the composition for custard according to the present invention are selected from carob-seed flour, guar flour and/or mixtures thereof, preferably carob-seed flour.

The emulsifying compounds which form component h) of the composition for custard according to the present invention are selected from mono-/di-glycerides of fatty acids, sucroesters, polysorbates and/or mixtures thereof, preferably mono-/di-glycerides of fatty acids.

The gelifiers which form component i) of the composition for custard according to the present invention are selected from pectin, alginates, carragenin and/or mixtures thereof, preferably pectin.

In another preferred embodiment, the composition for custard according to the present invention can also comprise aromatizing and/or food colouring compounds.

The composition for custard according to the present invention allows a freezable/unfreezable custard to be obtained, which has a distinct creaminess and softness, in addition to overall optimum organoleptic characteristics. The characteristics of the custard allow its cold preservation by freezing, ensuring, after thawing, the maintenance of its organoleptic and structural properties completely analogous to those of fresh products, which have just been prepared.

The average nutritional composition of the composition for custard according to the present invention has a content equal to 12.5% by weight of fats and 12% of sugar with respect to the total weight of the composition.

The presence of butter, a component which is normally absent in traditional compositions for custard, gives the custard a greater creaminess, allowing the formation of a particularly stable fatty phase due to its content of phospholipids, which act as natural emulsifiers in the presence of milk proteins.

The thickening compounds, emulsifiers and/or gelifying agents of the composition for custard according to the present invention contribute to reducing the presence of freezable free water.

The surprising capacity of preserving the organoleptic and structural properties of the custard obtained with the composition for custard according to the present invention which derives from the presence of butter and thickening additives, emulsifiers and/or gelifying agents, i.e. from the particular composition for custard, is further improved by the particular preparation process used.

The reduced quantity of sugar with respect to the traditional composition of a custard also contributes to the structural and organoleptic properties of the custard obtained with the composition for custard according to the present invention. A lower concentration of sugar improves the structural stability of the product, controlling the lowering of the freezing point and therefore reducing the presence of freezable water.

The excellent organoleptic characteristics and, above all, the particular soft and creamy structure, in addition to the absence of ice residues after the thawing of the custard obtained starting from the composition for custard according to the present invention, have been verified and are the object of sensory tests described in Example 1 below.

As previously indicated, an object of the present invention also relates to the process for the preparation of custard starting from the composition for custard according to the present invention.

The process, object of the present invention very surprisingly allows a custard to be obtained which preserves the structural characteristics and creaminess of the freshly prepared product, also after freezing and subsequent thawing.

The process, object of the present invention comprises the following phases:
i) mixing components a)-e) and g)-i);
ii) pasteurizing the mixture obtained from phase i) at a temperature ranging from 70°C to 90°C, preferably at 80°C,
iii) adding component f) to the mixture, preferably at a temperature of the mixture of 85°C;
iv) cooling the mixture at a rate ranging from 5°C to 15°C/min, preferably from 8°C/min to 12°C/min, under continuous stirring to a temperature ranging from 4°C to 10°C;
v) freezing the mixture at a temperature ranging from - 30°C to -35°C for a time varying from 30 to 45 minutes, preferably 30 minutes;
vi) preserving the mixture at a temperature ranging from -15°C to -20°C.

In particular phases v) and vi), for freezing and preservation respectively, can also be effected on the finished confectionery product ready for consumption.

This means that either the custard as such or a finished confectionery product comprising said custard as filling, topping, etc., can be subjected to freezing.

The process phases can be carried out in any equipment which is capable of consecutively effecting the various process phases. The best results are obtained with the TRITTICO EXECUTIVE® equipment with is provided with specific heating/cooling and mixing systems. In particular, the TRITTICO EXECUTIVE® equipment, by the discontinuous cooling of the walls of the container, allows the mixture to be homogeneously cooled in the whole of its volume and avoids the freezing of the part of the mixture in contact with or close to the walls.

The process according to the present invention is preferably effected according to the following operating procedure.

All the operating phases of the process are effected in continuous.

The butter is added to the mixture (phase iii)) in a melted state, in order to facilitate its dispersion and the homogenization of the mixture.

At the moment of adding the butter, the mixture is preferably at a temperature of 85°C.

The cooling (phase iv) is effected under moderate stirring and immediately after the addition phase of the hot melted butter. In this phase, there is the complete hydration of the stabilizers and crystallization of the fat phase, this process being entirely similar to maturing which allows the creamy mass to settle under homogeneous conditions without phase separations due to stratification or syneresis, and at the same time allowing a moderate incorporation of air.

The custard obtained with the process, object of the present invention can be frozen at a temperature of - 15°C/-20°C according to the normal food preservation techniques. For using the frozen cream, the subsequent thawing is preferably effected by bringing the cream to a temperature ranging from 4°C to 8°C for a time varying from 8 to 12 hours.

The particular qualitative and quantitative combination of the components of the composition for custard according to the present invention, together with the specific characteristics of the preparation process, object of the present invention, allow a custard to be obtained with excellent organoleptic and structural characteristics and which can be preserved under freezing conditions.

The results of the physico-chemical characterization of the custard according to the present invention also confirm the particularly advantageous aspects of the composition for custard and the process according to the present invention, aspects which allow a custard to be obtained which preserves the organoleptic and structural characteristics at the normal temperature of use, even after a cold preservation period by freezing and subsequent thawing.

The physico-chemical characterization was effected with electronic microscopy and scanning calorimetry techniques.

The results obtained with the composition according to the present invention were compared with those obtained with a traditional composition for custard obtained with the ingredients and procedures described above.

Calorimetry analysis allows the physical condition of the water present in the cream to be determined, both when it is frozen, and also after thawing and, at the final temperature of use of the product. Calorimetry analysis also allows the form of the water molecules in the composition at the different temperatures to be determined, i.e. if the water present is or is not in free form. The results of the calorimetric analyses are indicated in Example 1.

These results show that the custard obtained according to the present invention has a greater quantity of water molecules in non-freezable form and therefore more stable as it is bound in the solute system, in a pseudoplastic form.

With the scanning microscopy technique, on the other hand, the average diameter and distribution of the crystalline agglomerates of ice formed in the product due to the freezing of the water, are determined. The results show that, in the custard according to the present invention, the distribution of the ice agglomerates is normally more homogeneous with respect to that of the traditional reference custard, even if the average dimension is greater.

This result confirms a more homogeneous physical structure of the cream during the freezing phase which therefore leads to a uniform and homogeneous structure from the point of view of palatability at the moment of consumption.

The main advantage of the present invention is to allow a custard to be obtained, which preserves the organoleptic and structural properties also after its cold preservation by freezing and subsequent thawing to the temperature of use.

A further advantage is represented by the possibility of being able to avail in rapid times of a high-quality custard for the preparation of other confectionery products, by thawing the product already previously prepared.

Furthermore, the present invention allows the production of frozen confectionery products comprising custard with improved taste characteristics with respect to the products currently available on the market.

The characteristics and advantages of the composition for custard and the preparation process of custard according to the present invention will appear more evident from the following comparative, non-limiting embodiment example of the invention.

### EXAMPLE 1

The custard according to the present invention subjected to sensory analysis is obtained starting from a composition for custard which comprises a mixture with the following composition:
a) whole milk in a quantity equal to 62.4% by weight with respect to the total weight of the mixture;
b) saccharose in a quantity equal to 12.35% by weight with respect to the total weight of the mixture;
c) maize starch in a quantity equal to 5% by weight with respect to the total weight of the mixture;
d) fresh egg yolks in a quantity equal to 9% by weight with respect to the total weight of the mixture;
e) powdered lean milk in a quantity equal to 0.7% by weight with respect to the total weight of the mixture;
f) butter in a quantity equal to 10% by weight with respect to the total weight of the mixture;
g) carob-seed flour in a quantity equal to 0.25% by weight with respect to the total weight of the mixture;
h) mono-/di-glycerides of fatty acids in a quantity equal to 0.20% by weight with respect to the total weight of the mixture (and, specifically, Cremodan^{®} of Danisco A/S) ;
i) pectin in a quantity equal to 0.10% by weight with respect to the total weight of the mixture.

The preparation process comprised the following phases:
i) components a)-e) and g)-i) were mixed;
ii) the mixture obtained from phase i) was then pasteurized at 80°C,
iii) component f) was added to the pasteurized mixture, at a temperature of the mixture of 85°C;
iv) the mixture coming from phase iii) was cooled at a rate of 10°C/min, under continuous stirring, to a temperature of 6°C;
v) the mixture (already custard) thus obtained was frozen at a temperature of -30°C for 30 minutes;
vi) the custard was then preserved at a temperature of -15°C.

The custard thus obtained was subjected to sensory analysis on the part of a panel of 5 experts in the field. The results were compared with those obtained from the same analysis carried out on a traditional custard. The composition of the traditional custard was whole milk in a quantity equal to 60% by weight of the product, sugar (20%), egg yolks (15%) and flour (5%) and was obtained according to the classical preparation process.

More specifically, a base mixture was prepared by mixing sugar, flour and egg yolks, the milk was then brought to boiling point and the base mixture was added to the milk. The combination of base mixture and milk was again brought to boiling point and then cooled to a temperature of 6°C.

The traditional custard was then preserved at a temperature of -15°C.

Before the sensory analysis, both custards were thawed by putting them in a refrigerator at a temperature of 6°C for 10 hours.

The sensory analysis was carried out according to the "blind" method.

The sensory analysis allowed the taste, structure and creaminess characteristics of the samples of custard to be evaluated. The results, which are expressed on a numerical scale of values from 1 (the worst) to 5 (the best), are indicated in Table 1.

**TABLE 1- Sensory analysis**

| | Custard according to the present invention | Standard Custard |
|---|---|---|
| Taste | **4.2** | 4.0 |
| Structure | **4.5** | 3.2 |
| Creaminess | **4.8** | 4.0 |

The results show the excellent organoleptic characteristics of the custard obtained starting from the composition according to the present invention, all characteristics being higher than those of the traditional custard. In particular, the structure and creaminess at the temperature of use, after the thawing of the product are particularly appreciable.

The physico-chemical characterization of the samples of custard according to the present invention and traditional custard was carried out with the scanning calorimetry technique. The calorimetry allowed the quantity and physical condition of the water contained in the compositions to be identified, within the temperature range of -30°C and 20°C.

The results obtained on the sample of custard and on the sample of traditional custard according to the present invention are the following:

**TABLE 2- Calorimetric analysis**

| | Non-freezable water |
|---|---|
| Custard according to the present invention | 64% |
| Standard custard | 54% |

The calorimetric results showed that in the case of the custard according to the present invention there is a greater quantity of non-freezable water with respect to the reference product.

The average diameter and distribution of the crystals of ice in the custard according to the present invention and in a traditional custard, frozen at -30°C (Tables 3 and 4), were revealed with the scan microscope.

**TABLE 3- Microscope analysis (ice crystal dimension)**

| | Crystal dimension |
|---|---|
| Custard according to the present invention | 50-500 µm |
| Standard custard | 40-110 µm |

**TABLE 4- Microscope analysis (ice crystal distribution)**

| | Percentage of ice crystals | Diameter of ice crystals |
|---|---|---|
| Custard according to the present invention | 10% | **90 µm** |
| | 30% | **110µm** |
| | 80% | **300 µm** |
| Standard custard | 10% | **50 µm** |
| | 30% | **55 µm** |
| | 80% | **90 µm** |

The microscope results show that the dimensions of the crystals in the custard obtained from the composition according to the present invention are on an average larger than those which are formed in a standard custard. There is the tendency however towards a more homogeneous distribution of these within the structure of the cream according to the invention, with respect to the reference samples, as can be seen from an analysis of the calorimetric curves.

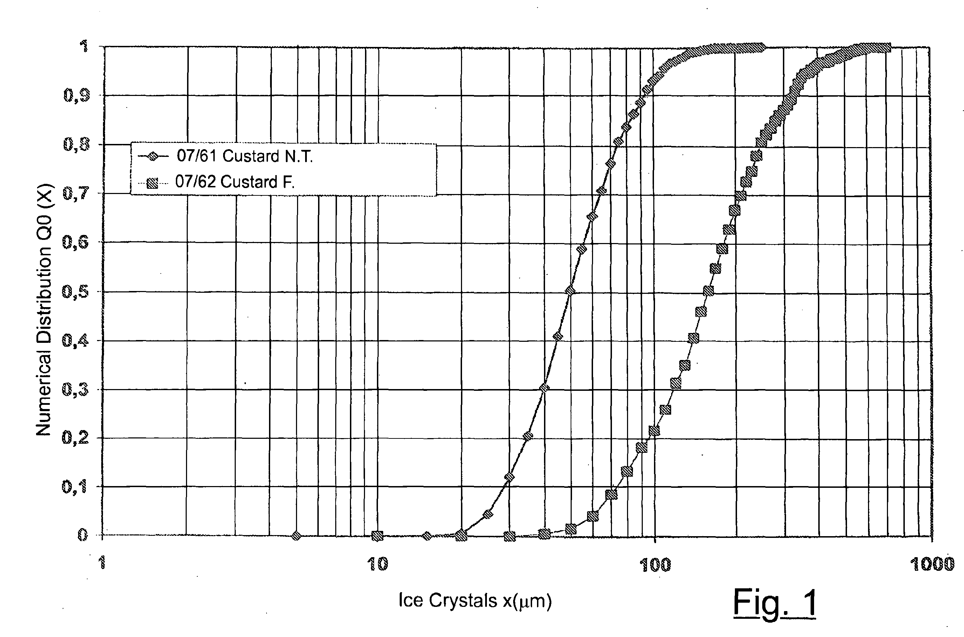

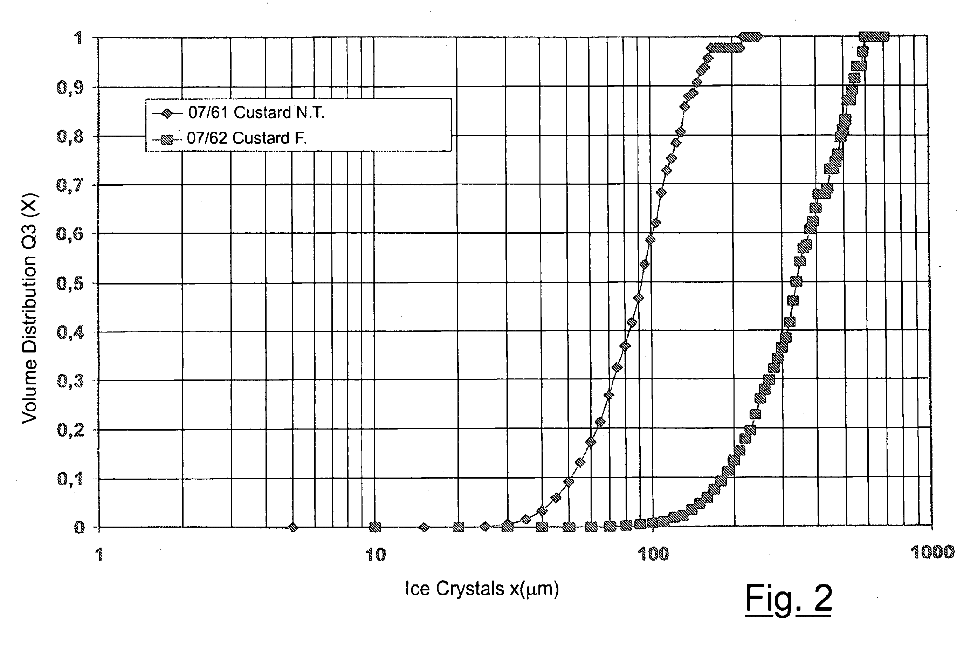

In particular, in the curve of figure 1 (electronic scanning microscope curve) the dimension of the diameter of the ice crystals F (i.e. of the custard according to the present invention) proves to be greater than NT (traditional custard), whereas in the curve of figure 2, it can be seen that the distribution is slightly more homogeneous.

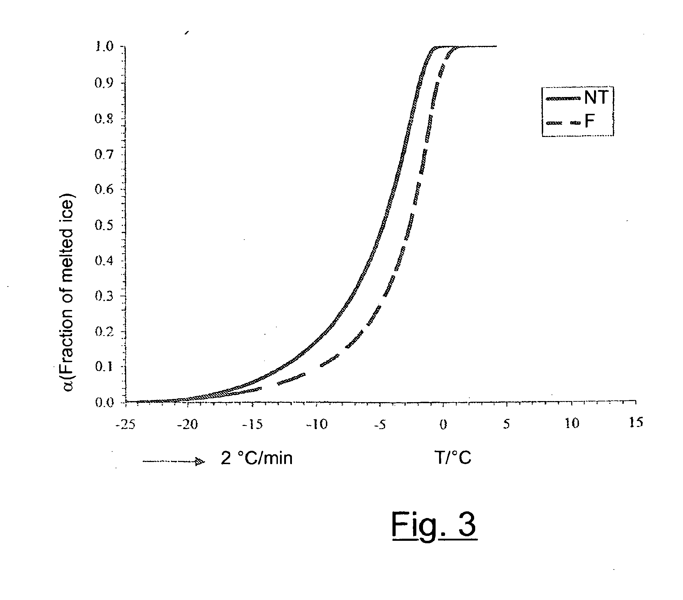

In the curve of figure 3 (calorimetric curve) the advance degree of the melting process α is represented, i.e. the fraction of melted ice in relation to the temperature during the DSC measurements with a scan rate of 2°C/min. It can be observed that the fraction of melted ice of F is always lower with respect to NT and this indicates a greater structural stability.

## Claims

1. A composition for custard comprising a mixture of:
a) milk in a quantity ranging from 50% to 70% by weight with respect to the total weight of the mixture, preferably from 55% to 65%;
b) sugar in a quantity ranging from 5% to 30% by weight with respect to the total weight of the mixture, preferably from 10% to 20%;
c) starch in a quantity ranging from 2% to 10% by weight with respect to the total weight of the mixture, preferably from 4% to 8%;
d) egg yolks in a quantity ranging from 5% to 15% by weight with respect to the total weight of the mixture, preferably from 8% to 12%;
e) powdered milk in a quantity ranging from 0.1% to 1.5% by weight with respect to the total weight of the mixture, preferably from 0.5% to 1%;
f) butter in a quantity ranging from 5% to 15% by weight with respect to the total weight of the mixture, preferably from 8% to 12%;
g) thickeners in a quantity ranging from 0.1% to 1% by weight with respect to the total weight of the mixture, preferably from 0.1% to 0.3%;
h) emulsifying agents in a quantity ranging from 0.1% to 1% by weight with respect to the total weight of the mixture, preferably from 0.1% to 0.3%;
i) gelifiers in a quantity ranging from 0.05% to 0.5% by weight with respect to the total weight of the mixture, preferably from 0.05% to 0.15%,
wherein said component g) is selected from carob-seed flour or guar flour and/or mixtures thereof, preferably carob-seed flour, said component h) is selected from mono-/di-glycerides of fatty acids, sucro-esters, polysorbates and/or mixtures thereof, preferably mono-/di-glycerides of fatty acids, and said component i) is selected from pectin, alginates, carragenin and/or mixtures thereof, preferably pectin.

2. The composition according to claim 1, **characterized in that** component a) is selected from whole milk, partially skimmed or skimmed milk, fresh milk or long-life milk and/or mixtures thereof, preferably whole fresh milk.

3. The composition according to claim 1, **characterized in that** component b) is selected from saccharose, lactose, dextrose, intensive sugars and/or mixtures thereof, preferably saccharose.

4. The composition according to claim 1, **characterized in that** component c) is selected from maize starch, tapioca starch, potato starch and/or mixtures thereof, preferably maize starch.

5. The composition according to claim 1, **characterized in that** component d) is selected from fresh egg yolks, powdered egg yolks, frozen egg yolks, preferably fresh egg yolks.

6. The composition according to claim 1, **characterized in that** component e) is selected from lean milk, whey and/or mixtures thereof, preferably lean milk.

7. The composition according to claim 1, **characterized in that** component a) is whole milk in a quantity equal to 62.4% by weight with respect to the total weight of the mixture; component b) is saccharose in a quantity of 12.35% by weight with respect to the total weight of the mixture; component c) is maize starch in a quantity equal to 5% by weight with respect to the total weight of the mixture; component d) consists of egg yolks in a quantity equal to 9% by weight with respect to the total weight of the mixture; component e) is powdered lean milk in a quantity equal to 0.7% by weight with respect to the total weight of the mixture; component f) is butter in a quantity equal to 10% by weight with respect to the total weight of the mixture; component g) is carob-seed flour in a quantity equal to 0.25% by weight with respect to the total weight of the mixture; component h) is mono-/di-glycerides of fatty acids in a quantity equal to 0.20% by weight with respect to the total weight of the mixture; component i) is pectin in a quantity equal to 0.10% by weight with respect to the total weight of the mixture.

8. The composition according to any of the claims from 1 to 7 comprising aromatizing and/or colouring substances.

9. A process for the preparation of custard starting from a mixture of:
a) milk in a quantity ranging from 50% to 70% by weight with respect to the total weight of the mixture, preferably from 55% to 65%;
b) sugar in a quantity ranging from 5% to 30% by weight with respect to the total weight of the mixture, preferably from 10% to 20%;
c) starch in a quantity ranging from 2% to 10% by weight with respect to the total weight of the mixture, preferably from 4% to 8%;
d) egg yolks in a quantity ranging from 5% to 15% by weight with respect to the total weight of the mixture, preferably from 8% to 12%;
e) powdered milk in a quantity ranging from 0.1% to 1.5% by weight with respect to the total weight of the mixture, preferably from 0.5% to 1%;
f) butter in a quantity ranging from 5% to 15% by weight with respect to the total weight of the mixture, preferably from 8% to 12%;
g) thickeners in a quantity ranging from 0.1% to 1% by weight with respect to the total weight of the mixture, preferably from 0.1% to 0.3%;
h) emulsifying agents in a quantity ranging from 0.1% to 1% by weight with respect to the total weight of the mixture, preferably from 0.1% to 0.3%;
i) gelifiers in a quantity ranging from 0.05% to 0.5% by weight with respect to the total weight of the mixture, preferably from 0.05% to 0.15%,
which comprises the following phases:
i) mixing components a)-e) and g)-i);
ii) pasteurizing the mixture obtained from phase i) at a temperature ranging from 70°C to 90°C, preferably at 80°C,
iii) adding component f) to the mixture;
iv) cooling the mixture at a rate ranging from 5°C to 15°C/min, preferably from 8°C/min to 12°C/min, under continuous stirring to a temperature ranging from 4°C to 10°C;
v) freezing the mixture at a temperature ranging from - 30°C to -35°C for a time varying from 30 to 45 minutes, preferably 30 minutes;
vi) preserving the mixture at a temperature ranging from -15°C to -20°C.

10. The process according to claim 9, **characterized in that** the composition for custard is a composition according to any of the claims from 2 to 7.

11. The process according to claim 9, **characterized in that** phases v) and vi) can be effected either on custard as such, or after the combination of the custard with a base, i.e. on a finished confectionery product comprising the custard as filling, topping.

12. The process according to claim 9, **characterized in that** the operative phases i)-vi) are effected in continuous.

13. The process according to claim 9, **characterized in that** in phase iii) the butter is added to the mixture in a melted state.

14. The process according to claim 9, **characterized in that** in phase iii) the butter is added to the mixture at a temperature of the mixture of 85°C.

15. The process according to claim 9, **characterized in that** phase iv) is carried out under moderate stirring conditions and immediately after phase iii).

## Patentansprüche

1. Zusammensetzung für eine Creme, umfassend ein Gemisch aus:
a) Milch mit einer Menge zwischen 50 Gew.-% und 70 Gel, -% in Bezug auf das Gesamtgewicht des Gemischs, vorzugsweise zwischen 55 % und 65 %;
b) Zucker mit einer Menge zwischen 5 Gew.-% und 30 Gew.-% in Bezug auf das Gesamtgewicht des Gemischs, vorzugsweise zwischen 10 % und 20 %;
c) Stärke mit einer Menge zwischen 2 Gew.-% und 10 Gew.-% in Bezug auf das Gesamtgewicht des Gemischs, vorzugsweise zwischen 4 % und 8 %;
d) Eigelb mit einer Menge zwischen 5 Gew.-% und 15 Gew.-% in Bezug auf das Gesamtgewicht des Gemischs, vorzugsweise zwischen 8 % und 12 %;
e) Milchpulver mit einer Menge zwischen 0,1 Gew.-% und 1,5 Gew.-% in Bezug auf das Gesamtgewicht des Gemischs, vorzugsweise zwischen 0,5 % und 1 %;
f) Butter mit einer Menge zwischen 5 Gew.-% und 15 Gew.-% in Bezug auf das Gesamtgewicht des Gemischs, vorzugsweise zwischen 8 % und 12 %;
g) Verdickungsmittel mit einer Menge zwischen 0,1 Gew.-% und 1 Gew.-% in Bezug auf das Gesamtgewicht des Gemischs, vorzugsweise zwischen 0,1 % und 0,3 %;
h) Emulgatoren mit einer Menge zwischen 0,1 Gew.-% und 1 Gew.-% in Bezug auf das Gesamtgewicht des Gemischs, vorzugsweise zwischen 0,1 % und 0,3 %;
i) Geliermittel mit einer Menge zwischen 0,05 Gew.-% und 0,5 Gew.-% in Bezug auf das Gesamtgewicht des Gemischs, vorzugsweise zwischen 0,05 % und 0,15 %,
wobei die Komponente g) aus Johannisbrotkernmehl oder Guarkernmehl und/oder Gemischen hiervon, vorzugsweise Johannisbrotkernmehl, ausgewählt wird, wobei die Komponente h) aus Mono-/Diglyceriden von Fettsäuren, Sucroestern, Polysorbaten und/oder Gemischen hiervon, vorzugsweise Mono-/Diglyceriden von Fettsäuren, ausgewählt wird, und wobei die Komponente i) aus Pektin, Alginaten, Carragenin und/oder Gemischen hiervon, vorzugsweise Pektin, ausgewählt wird.

2. Zusammensetzung nach Anspruch 1,
**dadurch gekennzeichnet, dass** Komponente a) aus Vollmilch, teilentrahmter Milch oder entrahmter Milch, Frischmilch oder haltbarer Milch und/oder Gemischen hiervon, vorzugsweise frischer Vollmilch, ausgewählt wird.

3. Zusammensetzung nach Anspruch 1,
**dadurch gekennzeichnet, dass** Komponente b) aus Saccharose, Laktose, Dextrose, intensiven Zuckern und/oder Gemischen hiervon, vorzugsweise Saccharose, ausgewählt wird.

4. Zusammensetzung nach Anspruch 1,
**dadurch gekennzeichnet, dass** Komponente c) aus Maisstärke, Tapiokastärke, Kartoffelstärke und/oder Gemischen hiervon, vorzugsweise Maisstärke, ausgewählt wird.

5. Zusammensetzung nach Anspruch 1,
**dadurch gekennzeichnet, dass** Komponente d) aus frischem Eigelb, Eigelbpulver, gefrorenem Eigelb, vorzugsweise frischem Eigelb, ausgewählt wird.

6. Zusammensetzung nach Anspruch 1,
**dadurch gekennzeichnet, dass** Komponente e) aus Magermilch, Molke und/oder Gemischen hiervon, vorzugsweise Magermilch, ausgewählt wird.

7. Zusammensetzung nach Anspruch 1,
**dadurch gekennzeichnet, dass** Komponente a) Vollmilch mit einer Menge gleich 62,4 Gew.-% in Bezug auf das Gesamtgewicht des Gemischs ist; Komponente b) Saccharose mit einer Menge von 12,35 Gew.-% in Bezug auf das Gesamtgewicht des Gemischs ist; Komponente c) Maisstärke mit einer Menge gleich 5 Gew.-% in Bezug auf das Gesamtgewicht des Gemischs ist; Komponente d) aus Eigelb mit einer Menge gleich 9 Gew.-% in Bezug auf das Gesamtgewicht des Gemischs besteht; Komponente e) Magermilchpulver mit einer Menge gleich 0,7 Gew.-% in Bezug auf das Gesamtgewicht des Gemischs ist; Komponente f) Butter mit einer Menge gleich 10 Gew.-% in Bezug auf das Gesamtgewicht des Gemischs ist; Komponente g) Johannisbrotkernmehl mit einer Menge gleich 0,25 Gew.-% in Bezug auf das Gesamtgewicht des Gemischs ist; Komponente h) Mono-/Diglyceride von Fettsäuren mit einer Menge gleich 0,20 Gew.-% in Bezug auf das Gesamtgewicht des Gemischs sind; Komponente i) Pektin mit einer Menge gleich 0,10 Gew.-% in Bezug auf das Gesamtgewicht des Gemischs ist.

8. Zusammensetzung nach einem der Ansprüche 1 bis 7, umfassend Aromatisierungs- und/oder Färbungssubstanzen.

9. Verfahren für die Herstellung von Creme, beginnend mit einem Gemisch aus:
a) Milch mit einer Menge zwischen 50 Gew.-% und 70 Gew.-% in Bezug auf das Gesamtgewicht des Gemischs, vorzugsweise zwischen 55 % und 65 %;
b) Zucker mit einer Menge zwischen 5 Gew.-% und 30 Gew.-% in Bezug auf das Gesamtgewicht des Gemischs, vorzugsweise zwischen 10 % und 20 %;
c) Stärke mit einer Menge zwischen 2 Gew.-% und 10 Gew.-% in Bezug auf das Gesamtgewicht des Gemischs, vorzugsweise zwischen 4 % und 8 %;
d) Eigelb mit einer Menge zwischen 5 Gew.-% und 15 Gew.-% in Bezug auf das Gesamtgewicht des Gemischs, vorzugsweise zwischen 8 % und 12 %;
e) Milchpulver mit einer Menge zwischen 0,1 Gew.-% und 1,5 Gew.-% in Bezug auf das Gesamtgewicht des Gemischs, vorzugsweise zwischen 0,5 % und 1 %;
f) Butter mit einer Menge zwischen 5 Ges.-% und 15 Gew.-% in Bezug auf das Gesamtgewicht des Gemischs, vorzugsweise zwischen 8 % und 12 %;
g) Verdickungsmittel mit einer Menge zwischen 0,1 Gew.-% und 1 Gew.-% in Bezug auf das Gesamtgewicht des Gemischs, vorzugsweise zwischen 0,1 % und 0,3 %;
h) Emulgatoren mit einer Menge zwischen 0,1 Gew.-% und 1 Gew.-% in Bezug auf das Gesamtgewicht des Gemischs, vorzugsweise zwischen 0,1 % und 0,3 %;
i) Geliermittel mit einer Menge zwischen 0,05 Gew.-% und 0,5 Gew.-% in Bezug auf das Gesamtgewicht des Gemischs, vorzugsweise zwischen 0,05 % und 0,15 %,
umfassend die folgenden Phasen:
i) Mischen der Komponenten a) - e) und g) - i);
ii) Pasteurisieren des aus Phase i) erhaltenen Gemischs mit einer Temperatur zwischen 70°C und 90°C, vorzugsweise mit 80°C,
iii) Hinzufügen von Komponente f) zu dem Gemisch;
iv) Kühlen des Gemischs mit einer Rate zwischen 5°C und 15°C/min, vorzugsweise zwischen 8°C/min und 12°C/min, unter kontinuierlichem Rühren bis zu einer Temperatur zwischen 4°C und 10°C;
v) Gefrieren des Gemischs mit einer Temperatur zwischen -30°C und -35°C für eine Zeit, die zwischen 30 und 45 Minuten variiert, vorzugsweise 30 Minuten;
vi) Konservieren des Gemischs mit einer Temperatur zwischen -15°C und -20°C.

10. Verfahren nach Anspruch 9,
**dadurch gekennzeichnet, dass** die Zusammensetzung für Creme eine Zusammensetzung nach einem der Ansprüche 2 bis 7 ist.

11. Verfahren nach Anspruch 9,
**dadurch gekennzeichnet, dass** die Phasen v) und vi) entweder bei Creme als solches oder nach der Kombination der Creme mit einer Basis, d.h. bei einem fertigen Konditoreiprodukt, das die Creme als Füllung, Belag umfasst, durchgeführt werden können.

12. Verfahren nach Anspruch 9,
**dadurch gekennzeichnet, dass** die operativen Phasen i) - vi) kontinuierlich durchgeführt werden.

13. Verfahren nach Anspruch 9,
**dadurch gekennzeichnet, dass** die Butter in Phase iii) dem Gemisch in einem geschmolzenen Zustand hinzugefügt wird.

14. Verfahren nach Anspruch 9,
**dadurch gekennzeichnet, dass** die Butter in Phase iii) dem Gemisch mit einer Temperatur des Gemischs von 85°C hinzugefügt wird.

15. Verfahren nach Anspruch 9,
**dadurch gekennzeichnet, dass** Phase iv) unter moderaten Rührbedingungen und unmittelbar nach Phase iii) ausgeführt wird.

## Revendications

1. Composition pour flan comprenant un mélange de :
a) lait en quantité comprise entre 50 et 70 % en poids par rapport au poids total du mélange, de préférence entre 55 et 65 % ;
b) sucre en quantité comprise entre 5 et 30 % en poids par rapport au poids total du mélange, de préférence entre 10 et 20 % ;
c) amidon en quantité comprise entre 2 et 10 % en poids par rapport au poids total du mélange, de préférence entre 4 et 8 % ;
d) jaunes d'oeufs en quantité comprise entre 5 et 15 % en poids par rapport au poids total du mélange, de préférence entre 8 et 12 % ;
e) lait en poudre en quantité comprise entre 0,1 et 1,5 % en poids par rapport au poids total du mélange, de préférence entre 0,5 et 1 % ;
f) beurre en quantité comprise entre 5 et 15 % en poids par rapport au poids total du mélange, de préférence entre 8 et 12 % ;
g) épaississants en quantité comprise entre 0,1 et 1 % en poids par rapport au poids total du mélange, de préférence entre 0,1 et 0,3 % ;
h) agents émulsifiants en quantité comprise entre 0,1 et 1 % en poids par rapport au poids total du mélange, de préférence entre 0,1 et 0,3 % ;
i) gélifiants en quantité comprise entre 0,05 et 0,5 % en poids par rapport au poids total du mélange, de préférence entre 0,05 et 0,15 % ;
dans laquelle ledit composant g) est choisi à partir de farine de caroube ou de farine de guar et/ou de mélanges de ceux-ci, de préférence de farine de caroube, ledit composant h) étant choisi à partir de mono-/di- glycérides d'acides gras, de sucro-esters, de polysorbates et/ou de mélanges de ceux-ci, de préférence de mono-/di- glycérides d'acides gras, et ledit composant i) étant choisi parmi la pectine, les alginates, la carragénine et/ou des mélanges de ceux-ci, et s'agissant de préférence de pectine.

2. Composition selon la revendication 1, **caractérisée en ce que** le composant a) est choisi parmi le lait entier, le lait partiellement écrémé ou écrémé, le lait frais ou le lait longue conservation et/ou des mélanges de ceux-ci, de préférence du lait entier frais.

3. Composition selon la revendication 1, **caractérisée en ce que** le composant b) est choisi parmi le saccharose, le lactose, le dextrose, les sucres intenses et/ou des mélanges de ceux-ci, de préférence du saccharose.

4. Composition selon la revendication 1, **caractérisée en ce que** le composant c) est choisi parmi l'amidon de maïs, l'amidon de tapioca, l'amidon de pomme de terre et/ou des mélanges de ceux-ci, de préférence de l'amidon de maïs.

5. Composition selon la revendication 1, **caractérisée en ce que** le composant d) est choisi parmi le composant d) est choisi entre des jaunes d'oeufs frais, des jaunes d'oeufs en poudre, des jaunes d'oeufs congelés, de préférence des jaunes d'oeufs frais.

6. Composition selon la revendication 1, **caractérisée en ce que** le composant e) est choisi parmi le lait écrémé, le lactosérum et/ou des mélanges de ceux-ci, de préférence du lait écrémé.

7. Composition selon la revendication 1, **caractérisée en ce que** le composant a) est du lait entier en quantité égale à 62,4 % en poids par rapport au poids total du mélange ; le composant b) est du saccharose en quantité valant 12,35 % en poids par rapport au poids total du mélange ; le composant c) est de l'amidon de maïs en quantité égale à 5 % en poids par rapport au poids total du mélange ; le composant d) est constitué de jaunes d'oeufs en quantité égale à 9 % en poids par rapport au poids total du mélange ; le composant e) est du lait écrémé en poudre en quantité égale à 0,7 % en poids par rapport au poids total du mélange ; le composant f) est du beurre en quantité égale à 10 % en poids par rapport au poids total du mélange ; le composant g) est de la farine de caroube en quantité égale à 0,25 % en poids par rapport au poids total du mélange ; le composant h) correspond à des mono-/di- glycérides d'acides gras en quantité égale à 0,20 % en poids par rapport au poids total du mélange ; le composant i) est de la pectine en quantité égale à 0,10 % en poids par rapport au poids total du mélange.

8. Composition selon l'une des revendications 1 à 7, comprenant des substances d'aromatisation et/ou de coloration.

9. Procédé de préparation de flan à partir d'un mélange de :
a) lait en quantité comprise entre 50 et 70 % en poids par rapport au poids total du mélange, de préférence entre 55 et 65 % ;
b) sucre en quantité comprise entre 5 et 30 % en poids par rapport au poids total du mélange, de préférence entre 10 et 20 % ;
c) amidon en quantité comprise entre 2 et 10 % en poids par rapport au poids total du mélange, de préférence entre 4 et 8 % ;
d) jaunes d'oeufs en quantité comprise entre 5 et 15 % en poids par rapport au poids total du mélange, de préférence entre 8 et 12 % ;
e) lait en poudre en quantité comprise entre 0,1 et 1,5 % en poids par rapport au poids total du mélange, de préférence entre 0,5 et 1 % ;
f) beurre en quantité comprise entre 5 et 15 % en poids par rapport au poids total du mélange, de préférence entre 8 et 12 % ;
g) épaississants en quantité comprise entre 0,1 et 1 % en poids par rapport au poids total du mélange, de préférence entre 0,1 et 0,3 % ;
h) agents émulsifiants en quantité comprise entre 0,1 et 1 % en poids par rapport au poids total du mélange, de préférence entre 0,1 et 0,3 % ;
i) gélifiants en quantité comprise entre 0,05 et 0,5 % en poids par rapport au poids total du mélange, de préférence entre 0,05 et 0,15 % ;
qui comprend les phases suivantes :
i) mélanger les composants a) à e) et g) à i) ;
ii) pasteuriser le mélange obtenu à partir de la phase i), à une température comprise entre 70 et 90 °C, de préférence à 80 °C,
iii) ajouter le composant f) au mélange ;
iv) refroidir le mélange à une vitesse comprise entre 5 et 15 °C/nm, de préférence entre 8 et 12 °C/mn, avec agitation constante à une température comprise entre 4 et 10 °C ;
v) congeler le mélange à une température comprise entre - 30 et - 35 °C pendant une durée comprise entre 30 et 45 mn, de préférence égale à 30 mn ;
vi) conserver le mélange à une température comprise entre - 15 et - 20 °C.

10. Procédé selon la revendication 9, **caractérisé en ce que** la composition pour flan est une composition conforme à l'une des revendications 2 à 7.

11. Procédé selon la revendication 9, **caractérisé en ce que** les phases v) et vi) peuvent être effectuées soit sur du flan en tant que tel, soit après combinaison du flan avec une base, c.-à-d. sur un produit fini de pâtisserie contenant le flan en tant que garniture, nappage.

12. Procédé selon la revendication 9, **caractérisé en ce que** les phases d'opération i) à vi) sont effectuées en continu,

13. Procédé selon la revendication 9, **caractérisé en ce que** lors de la phase iii), le beurre est ajouté au mélange à l'état fondu.

14. Procédé selon la revendication 9, **caractérisé en ce que** lors de la phase iii), le beurre est ajouté au mélange à une température de 85 °C.

15. Procédé selon la revendication 9, **caractérisé en ce que** la phase iv) a lieu dans des conditions d'agitation modérée et immédiatement après la phase iii).
